# EUROPÄISCHE PATENTSCHRIFT

(11) **EP 2 993 377 B1**
(45) Veröffentlichungstag und Bekanntmachung des Hinweises auf die Patenterteilung: **10.05.2017**
(21) Anmeldenummer: 15172273.3
(22) Anmeldetag: 16.06.2015
(51) Int. Cl.: F16H 9/12, A01D 69/06

(54) **SCHWENKVARIATOR**
PIVOTING VARIATOR
VARIATEUR PIVOTANT

(30) Priorität: 08.09.2014 DE 102014112885
(43) Veröffentlichungstag der Anmeldung: 09.03.2016
(73) Patentinhaber: CLAAS Selbstfahrende Erntemaschinen GmbH, 33428 Harsewinkel (DE)
(72) Erfinder: Spreckelmeyer, Kai, 49124 Georgsmarienhütte (DE); Schönert, Benedikt, 59823 Arnsberg (DE); Koch, Markus, 48369 Saerbeck (DE)

(56) Entgegenhaltungen:
- US-A- 2 639 569
- US-A- 3 457 797
- US-A- 4 132 121

## Beschreibung

Die vorliegende Erfindung betrifft einen Schwenkvariator gemäß dem Oberbegriff des Anspruches 1 sowie einen Mähdrescher gemäß dem Anspruch 6.

Das Übersetzungsverhältnis von Riementrieben wird im Allgemeinen durch so genannte Variatoren variiert, indem einander gegenüberliegende Keilriemenscheiben in axialer Richtung abstandsveränderlich ausgeführt sind. Zur Aufrechterhaltung der für den Betrieb notwendigen Riemenspannung sind Spannmittel vorgesehen, die gegen den Riemen gepresst werden, um ein Schlupfen zu verhindern. Derartige Variatoren kommen unter anderem auch an Mähdreschern zum Einsatz. Diese Spannmittel lassen sich von einer Bedienperson hinsichtlich der aufzubringenden Vorspannung einstellen. Eine fehlerhafte Einstellung der Vorspannung führt jedoch bei zu hoher Vorspannung zu einer deutlichen Verringerung der Riemenlebensdauer. Eine zu niedrig gewählte Vorspannung reduziert hingegen die Leistungsübertragung. Ein weiterer Aspekt ist der Abfall der Riemenvorspannung bei der im Betrieb zwangsläufig auftretenden Riemendehnung, deren Ausgleich durch nachjustieren der Spannmittel erfolgen muss.

Aus der DE 19 52 478 C3 ist es bekannt, anstelle von Spannmitteln zur Aufrechterhaltung der Riemenspannung bei einem Betrieb eines Variators einen sogenannten Schwenkvariator einzusetzen, der mit einem schwenkbaren Rahmen sowie in diesem geführten feststehenden Riemenscheiben zwischen denen eine axial verschiebbare Stellscheibe angeordnet ist, ausgeführt ist. Der Rahmen des Schwenkvariator wird mittels einer federbelasteten Kniehebelanordnung nachgeführt, um die bei längerem Gebrauch auftretende Riemenlängung auszugleichen.

Als nachteilig an dieser Anordnung hat sich gezeigt, dass der Aufbau eines solchen Schwenkvariators aufwendig ist. Es bedarf einerseits der Halterung und Führung der Stellscheibe sowie der diese einschließenden feststehenden Riemenscheiben. Zusätzlich ist der Kniehebelanordung eine Vorspannvorrichtung zugeordnet, die schwenkbar mit Gestängegliedern der Kniehebelanordung verbunden ist. Die Vorspannvorrichtung folgt der Bewegung der Gestängeglieder der Kniehebelanordnung beim Nachführen des Schwenkvariators.Die gattungsgemässe US 3,457,797 A zeigt einen Schwenkvariator mit einem Joch, das zwei voneinander beabstandete parallele Arme aufweist, an denen die die Riemenscheibe und die Stellscheiben tragende Welle gelagert ist. Das Joch ist gegen die Kraft von Federn gegenüber einem um eine Schwenkachse schwenkbaren Tragrahmen vorgespannt, und in eine lineare Richtung entlang von Tragarmen des Tragrahmens verschieblich. Aufgabe der vorliegenden Erfindung ist es, einen Schwenkvariator gemäß dem Oberbegriff des Anspruches 1 derart weiterzuentwickeln, dass dieser sich durch einen einfacheren Aufbau auszeichnet.

Diese Aufgabe wird durch die kennzeichnenden Merkmale des Anspruches 1 gelöst. Vorteilhafte Weiterbildungen der Erfindung sind Gegenstand der Unteransprüche. Gemäß dem Anspruch 1 wird vorgeschlagen, dass der Rahmen einen ersten Rahmenabschnitt aufweist, der um eine Schwenkachse drehbar ist, sowie einen zweiten, mittels zumindest eines in den Rahmen integrierten Federelementes gegenüber dem ersten Rahmenabschnitt vorgespannten Rahmenabschnitt, an dem die Riemenscheiben und die Stellscheibe gelagert sind, wobei der zweite Rahmenabschnitt mittels des ersten Rahmenabschnittes linear geführt ist. Die lineare Führung des zweiten Rahmenabschnittes durch den ersten Rahmenabschnitt sowie die Integration des zumindest einen Federelementes in den Rahmen vereinfachen den Aufbau des Schwenkvariators. Es handelt sich um eine bauraumsparende Ausgestaltung des Schwenkvariators. Im Gegensatz zu der Lösung gemäß der DE 19 52 478 C3, die zusätzlich zu dem schwenkbar gelagerten Rahmen eine sich in Andruckrichtung erstreckende Kniehebelanordnung zur Aufbringung der notwendigen Vorspannung sowie zur Führung der am Rahmen gelagerten feststehenden Riemenscheiben sowie der axial verschiebbaren Stellscheibe aufweist, wird erfindungsgemäß eine kompakte Bauweise erzielt.

Dafür weist der erste Rahmenabschnitt zwei zueinander parallel angeordnete zylinderförmige Träger auf, die mit ihrem einen Ende drehbar an der Schwenkachse angelenkt sind.

Zudem umfasst der zweite Rahmenabschnitt zwei Lagerkonsolen, die jeweils einen hohlzylindrischen Abschnitt aufweisen, mittels denen die jeweilige Lagerkonsole koaxial zu dem jeweiligen Träger angeordnet ist. Der sich abschnittsweise in Längsrichtung des Trägers erstreckende hohlzylindrische Abschnitt der Lagerkonsole umschließt den Träger zumindest abschnittsweise in radialer Richtung. Dadurch wird eine gleitende Führung der zwischen den Lagerkonsolen des zweiten Rahmenabschnittes angeordneten feststehenden Riemenscheiben und der axial zu diesen verschieblichen Stellscheibe gewährleistet. Der zweite Rahmenabschnitt ist so mittels der hohlzylindrischen Abschnitte relativ zu dem ersten Rahmenabschnitt verschieblich und somit durch den ersten Rahmenabschnitt linear geführt.

Vorteilhafterweise kann zwischen dem jeweiligen Träger und der hierzu koaxial angeordneten Lagerkonsole jeweils ein koaxial zum Träger angeordnetes Federelement vorgesehen sein. Das die Vorspannung aufbringende Federelement ist somit zwischen dem ersten Rahmenabschnitt und dem zweiten Rahmenabschnitt eingefasst. Das Federelement kann sich einerseits auf der der Schwenkachse zugewandten Seite abstützen. Andererseits kann sich das Federelement an einem flanschförmigen Abschnitt des jeweiligen Lagerelementes abstützen.

Vorzugsweise kann das Federelement als Druckfeder ausgeführt sein.

Gemäß dem Anspruch 6 wird ein Mähdrescher vorgeschlagen, der dadurch gekennzeichnet ist, dass der Mähdrescher mit zumindest einem Schwenkvariator nach einem der Ansprüche 1 bis 5 ausgeführt ist. Ein Mähdrescher mit einem solchen Schwenkvariator zeichnet sich durch eine einfachere Handhabbarkeit bei der Einstellung der Riemenvorspannung aus. Darüber hinaus wird einem übermäßigen Abfall der Riemenvorspannung bei auftretender Riemendehnung begegnet. Ein weiterer Vorteil besteht darin, dass einer Verringerung der Leistungsübertragung bei Lastwechseln entgegengewirkt wird.

Die vorliegende Erfindung wird nachstehend anhand von einem in den Zeichnungen dargestellten Ausführungsbeispiel näher erläutert.

Es zeigen:
- Fig. 1: eine schematisierte Teilseitenansicht eines Mähdreschers;
- Fig. 2: eine vergrößerte Ansicht eines Schwenkvariators von der Seite gemäß Fig. 1;
- Fig. 3: eine Ansicht auf den Schwenkvariators gemäß Fig. 1 von schräg unten.

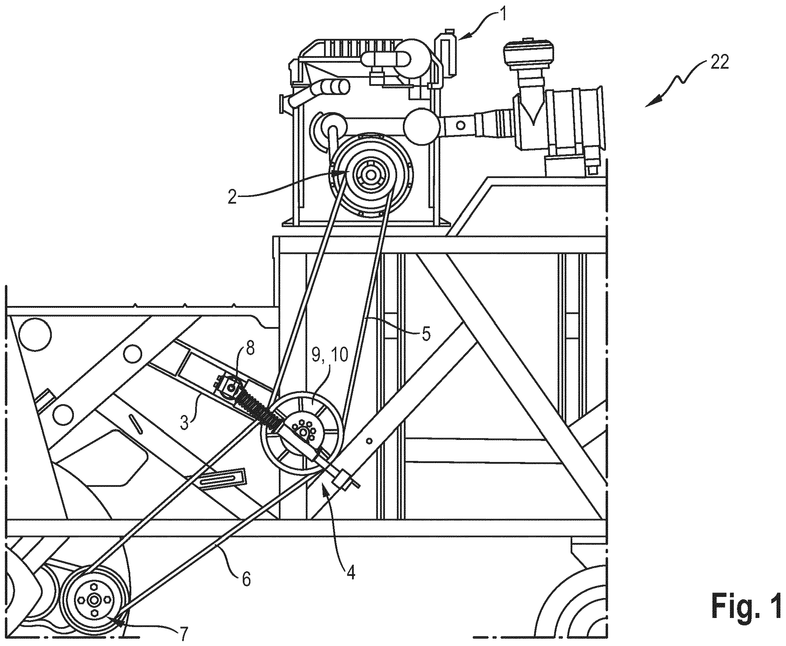

Die Darstellung in Fig. 1 zeigt eine Teilansicht eines Mähdreschers 22, dessen Aufbau und Funktionsweise grundsätzlich bekannt ist, so dass auf eine eingehende Beschreibung derselben verzichtet wird.

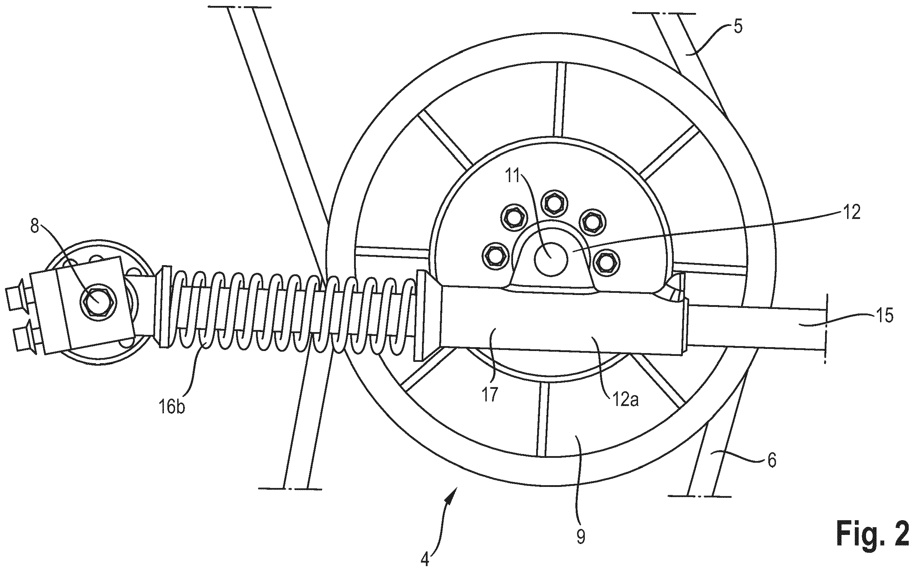

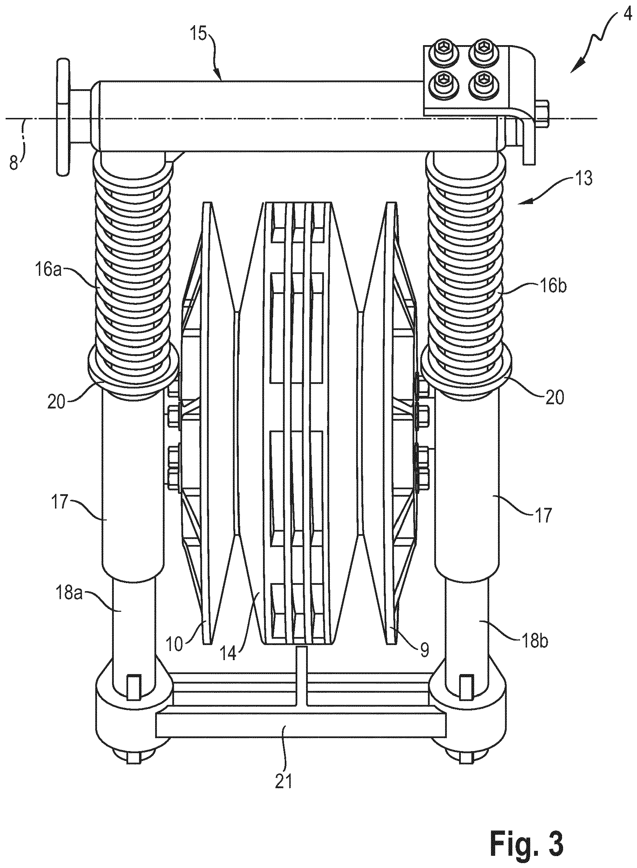

Die Teilansicht des Mähdreschers 22 zeigt einen als Verbrennungsmotor ausgeführten Hauptantrieb 1, der eine Antriebsriemenscheibe 2 aufweist. An einem Karosserieabschnitt 3 des Mähdreschers 22 unterhalb des Hauptantriebes 1 ist ein Schwenkvariator 4 angeordnet, welcher nachfolgend anhand der Figuren 2 und 3 näher erläutert wird. Der Schwenkvariator 4 ist durch einen ersten Riemen 5 trieblich mit der Antriebsriemenscheibe 2 verbunden. Der Schwenkvariator 4 ist mittels eines zweiten Riemens 6 mit einer Abtriebsriemenscheibe 7 trieblich verbunden. Zur Aufnahme des ersten Riemens 5 und des zweiten Riemens 6 weist der Schwenkvariator 4 zwei äußere Riemenscheiben 9, 10 auf, von denen in Fig. 1 nur die Rückseite der äußeren Riemenscheibe 9 sichtbar ist. Weiterhin weist der Riemenvariator 4 eine zwischen den Riemenscheiben 9 und 10 angeordnete Stellscheibe 14 auf, wie aus der Darstellung in Fig. 3 ersichtlich ist. Von der Abtriebsriemenscheibe 7 wird ein Arbeitsaggregat des Mähdreschers 22 angetrieben. Handelt es sich beispielsweise bei dem angetriebenen Arbeitsaggregat um ein Gebläse einer Reinigungsvorrichtung, so ist die Möglichkeit einer Veränderung der Drehzahl zwingend erforderlich, um auf sich ändernde Erntebedingungen wie Änderungen der Fruchtart reagieren zu können. Die Variation der Drehzahl an der Abtriebsriemenscheibe 7 wird durch eine Übersetzungsänderung am Schwenkvariator 4 erreicht, indem durch axiales Verschieben der Stellscheibe 14 der jeweilige Wirkdurchmesser zwischen den äußeren Riemenscheiben 9 und 10 und der Stellscheibe 14 variiert wird. Der Schwenkvariator 4 ist um eine an dem Karosserieabschnitt 3 befestigte Schwenkachse 8 schwenkbar gelagert.

Der Aufbau des Schwenkvariators 4 wird nachfolgend anhand der Fig. 2 und 3 näher erläutert. Fig. 2 zeigt eine vergrößerte Ansicht des Schwenkvariators 4 von der Seite gemäß Fig. 1. Die Darstellung in Fig. 3 zeigt eine Ansicht auf den Schwenkvariators 4 gemäß Fig. 1 von schräg unten. Der Schwenkvariator 4 umfasst einen schwenkbaren Rahmen 13 sowie die mit diesem um die Schwenkachse 8 geführten äußeren Riemenscheiben 9 und 10, zwischen denen die axial verschiebbare Stellscheibe 14 angeordnet ist. Der Rahmen 13 weist einen ersten Rahmenabschnitt 15 auf, der um die Schwenkachse 8 drehbar angeordnet ist. Der erste Rahmenabschnitt 15 ist dabei im Wesentlichen U-förmig ausgeführt. Weiterhin weist der Rahmen 13 einen mittels zumindest eines in den Rahmen 13 integrierten Federelementes 16 gegenüber dem ersten Rahmenabschnitt 15 vorgespannten zweiten Rahmenabschnitt 17 auf. Der zweite Rahmenabschnitt 17 ist aus zwei einander gegenüberliegenden Lagerkonsolen 12, die an einem hohlzylindrischen Abschnitt 12a angeordnet sind, ausgebildet. Die Lagerkonsolen 12 dienen zur Aufnahme einer Achse 11. Auf der Achse 11 sind die äußeren Riemenscheiben 9 und 10 und die Stellscheibe 14 drehbar gelagert zwischen den Lagerkonsolen 12 eingefasst. Die Stellscheibe 14 ist auf der Achse 11 in axialer Richtung zwischen den äußeren Riemenscheiben 9, 10 verschieblich, wodurch eine Variation der Wirkdurchmesser und damit eine Übersetzungsänderung erreichbar ist. Der zweite Rahmenabschnitt 17 ist im Wesentlichen H-förmig ausgebildet.

Der erste Rahmenabschnitt 15 weist zwei zueinander parallel angeordnete zylinderförmige Träger 18a, 18b auf, die mit ihrem einen Ende durch eine koaxial zu der Schwenkachse 8 angeordneten Aufnahme 19 angelenkt sind. Die hohlzylindrischen Abschnitte 12a des zweiten Rahmenabschnitts 17 sind jeweils koaxial auf dem jeweiligen Träger 18a, 18b des ersten Rahmenabschnitts 15 angeordnet. Der zweite Rahmenabschnitt 17 ist mittels der hohlzylindrischen Abschnitte 12a relativ zu dem ersten Rahmenabschnitt 15 verschieblich und somit durch den ersten Rahmenabschnitt 15 linear geführt. Zwischen dem jeweiligen Träger 18a, 18b des ersten Rahmenabschnittes 15 und den hierzu koaxial angeordneten Abschnitten 12a ist jeweils ein koaxial zu den Trägern 18a, 18b angeordnetes Federelement 16a, 16b vorgesehen. Das vorzugsweise als Druckfeder ausgeführte Federelement 16a, 16b stützt sich auf seiner der Schwenkachse 8 zugewandten Seite an der die Schwenkachse 8 umschließenden Aufnahme 19 ab. Das andere Ende des Federelementes 16a, 16b stützt sich an einem flanschartigen Element 20 an dem zweiten Rahmenabschnitt 17 ab. Eine Quertraverse 21 verbindet endseitig die freien Enden der Träger 18a, 18b des ersten Rahmenabschnittes 15 miteinander. Die Quertraverse 21 ist lösbar an den Trägern 18a, 18b angeordnet, um die Zugänglichkeit zu den Riemenscheiben 9, 10 und der Stellscheibe 14 zu ermöglichen..

Die Vorspannung der Federelemente 16a, 16b wirkt den von dem ersten Riemen 5 und dem zweiten Riemen 6 auf den Schwenkvariator 4 aufgebrachten Kräften entgegen. Dies wirkt sich positiv auf die Lebensdauer des ersten und des zweiten Riemens 5, 6 und deren Leistungsübertragung aus. Zudem entfällt das Einstellen einer Riemenspannung durch eine Bedienperson, so dass Fehleinstellungen vermieden werden können.

### Bezugszeichenliste

- **1**: Hauptantrieb
- **2**: Antriebsriemenscheibe
- **3**: Karosserieabschnitt
- **4**: Schwenkvariator
- **5**: Erster Riemen
- **6**: Zweiter Riemen
- **7**: Abtriebsriemenscheibe
- **8**: Schwenkachse
- **9**: Äußere Riemenscheibe
- **10**: Äußere Riemenscheibe
- **11**: Achse
- **12**: Lagerkonsole
- **12a**: Hohlzylindrischer Abschnitt
- **13**: Rahmen
- **14**: Stellscheibe
- **15**: Ersten Rahmenabschnitt
- **16a**: Federelement
- **16b**: Federelement
- **17**: Zweiten Rahmenabschnitt
- **18a**: Träger
- **18b**: Träger
- **19**: Aufnahme
- **20**: Flanschartiges Element
- **21**: Quertraverse
- **22**: Mähdrescher

## Patentansprüche

1. Schwenkvariator (4), mit einem schwenkbaren Rahmen (13) sowie mit diesem geführten feststehenden Riemenscheiben (9, 10) zwischen denen eine axial verschiebbare Stellscheibe (14) angeordnet ist, wobei der Rahmen (13) einen ersten Rahmenabschnitt (15) aufweist, der um eine Schwenkachse (8) drehbar ist, sowie einen zweiten, mittels zumindest eines in den Rahmen (13) integrierten Federelementes (16a, 16b) gegenüber dem ersten Rahmenabschnitt (15) vorgespannten Rahmenabschnitt (17), an dem die Riemenscheiben (9, 10) und die Stellscheibe (14) gelagert sind, wobei der erste Rahmenabschnitt (15) zwei zueinander parallel angeordnete zylinderförmige Träger (18a, 18b) aufweist, die mit ihrem einen Ende drehbar an der Schwenkachse (8) angelenkt sind, und wobei der zweite Rahmenabschnitt (17) zwei Lagerkonsolen (12) umfasst,
**dadurch gekennzeichnet, dass**
die Lagerkonsolen (12) jeweils einen hohlzylindrischen Abschnitt (12a) aufweisen, mittels denen die jeweilige Lagerkonsole (12) koaxial zu dem jeweiligen Träger (18a, 18b) des ersten Rahmenabschnitts (15) angeordnet sind, und der zweite Rahmenabschnitt (17) mittels der hohlzylindrischen Abschnitte (12a) relativ zu dem ersten Rahmenabschnitt (15) verschieblich ist, so dass der zweite Rahmenabschnitt (17) mittels des ersten Rahmenabschnittes (15) linear geführt ist.

2. Schwenkvariator (4) nach Anspruch 1, **dadurch gekennzeichnet, dass** zwischen dem jeweiligen Träger (18a, 18b) und der hierzu koaxial angeordneten Lagerkonsole (12) jeweils ein koaxial zum Träger (18a, 18b) angeordnetes Federelement (16a, 16b) vorgesehen ist.

3. Schwenkvariator (4) nach einem der Ansprüche 1 bis 2, **dadurch gekennzeichnet, dass** das Federelement (16a, 16b) als Druckfeder ausgeführt ist.

4. Mähdrescher (22), **dadurch gekennzeichnet, dass** der Mähdrescher (22) mit zumindest einem Schwenkvariator (4) nach einem der Ansprüche 1 bis 3 ausgeführt ist.

## Claims

1. A pivoting variator (4) comprising a pivotable frame (13) and stationary belt pulleys (9, 10) which are guided therewith and between which is arranged an axially displaceable adjusting disc (14), wherein the frame (13) has a first frame portion (15) rotatable about a pivot axis (8), and a second frame portion (17) which is biased by means of at least one spring element (16a, 16b) integrated into the frame (13) with respect to the first frame portion (15) and on which the belt pulleys (9, 10) and the adjusting disc (14) are mounted, wherein the first frame portion (15) has two mutually parallel cylindrical carriers (18a, 18b) which are mounted with their one end rotatably at the pivot axis (8) and wherein the second frame portion (17) has two bearing brackets (12),
**characterised in that** the bearing brackets (12) each have a respective hollow-cylindrical portion (12a), by means of which the respective bearing bracket (12) is arranged coaxially with respect to the respective carrier (18a, 18b) of the first frame portion (15), and the second frame portion (17) is displaceable by means of the hollow-cylindrical portions (12a) relative to the first frame portion (15) so that the second frame portion (17) is linearly guided by means of the first frame portion (15).

2. A pivoting variator (4) according to claim 1 **characterised in that** provided between the respective carrier (18a, 18b) and the bearing bracket (12) which is arranged coaxially therewith is a respective spring element (16a, 16b) arranged coaxially relative to the carrier (18a, 18b).

3. A pivoting variator (4) according to one of claims 1 and 2 **characterised in that** spring element (16a, 16b) is in the form of a compression spring.

4. A combine harvester (22) **characterised in that** the combine harvester (22) is equipped with at least one pivoting variator (4) according to one of claims 1 to 3.

## Revendications

1. Variateur pivotant (4) comprenant un bâti pivotant (13) ainsi que des poulies à courroie fixes (9, 10) qui sont guidées avec celui-ci et entre lesquelles est disposé un disque de réglage axialement coulissant (14), le bâti (13) comportant une première portion de bâti (15) qui peut tourner autour d'un axe de pivotement (8), ainsi qu'une seconde portion de bâti (17) qui est précontrainte par rapport à la première portion de bâti (15) au moyen d'au moins un élément élastique (16a, 16b) intégré au bâti (13) et sur laquelle sont montés les poulies à courroie (9, 10) et le disque de réglage (14), la première portion de bâti (15) comportant deux montants cylindriques (18a, 18b) qui sont disposés parallèlement l'un à l'autre et qui, par l'une de leurs extrémités, sont articulés en rotation sur l'axe de pivotement (8), et la seconde portion de bâti (17) comportant deux supports de paliers (12), **caractérisé en ce que** les supports de paliers (12) comportent chacun une portion cylindrique creuse (12a) au moyen de laquelle le support de palier correspondant (12) est disposé coaxialement au montant correspondant (18a, 18b) de la première portion de bâti (15), et la seconde portion de bâti (17) est coulissante par rapport à la première portion de bâti (15) au moyen des portions cylindriques creuses (12a), de sorte que la seconde portion de bâti (17) est guidée linéairement au moyen de la première portion de bâti (15).

2. Variateur pivotant (4) selon la revendication 1, **caractérisé en ce qu'**entre chaque montant (18a, 18b) et le support de palier (12) disposé coaxialement à lui est prévu un élément élastique (16a, 16b) disposé coaxialement au montant (18a, 18b).

3. Variateur pivotant (4) selon une des revendications là 2, **caractérisé en ce que** l'élément élastique (16a, 16b) est conformé en ressort de compression.

4. Moissonneuse-batteuse (22), **caractérisée en ce que** la moissonneuse-batteuse (22) est conçue avec au moins un variateur pivotant (4) selon une des revendications 1 à 3.
